(19) Europäisches Patentamt
European Patent Office
Office européen des brevets

(11) Publication number : **0 526 161 A1**

(12) **EUROPEAN PATENT APPLICATION**

(21) Application number : **92306866.2**

(22) Date of filing : **28.07.92**

(51) Int. Cl.[5] : **C08L 79/08,** C08L 83/10, C08K 3/22

(30) Priority : **02.08.91 US 739614**

(43) Date of publication of application :
**03.02.93 Bulletin 93/05**

(84) Designated Contracting States :
**DE FR GB IT NL**

(71) Applicant : **GENERAL ELECTRIC COMPANY**
**1 River Road**
**Schenectady, NY 12345 (US)**

(72) Inventor : **Glaser, Raymond Hans**
**4701 Ford Road**
**Mount Vernon, Indiana 47620 (US)**

(74) Representative : **Pratt, Richard Wilson et al**
**London Patent Operation G.E. Technical Services Co. Inc. Essex House 12/13 Essex Street**
**London WC2R 3AA (GB)**

(54) **Flame retardant siloxane polyetherimide copolymer compositions.**

(57) Siloxane polyetherimide copolymers comprising flame retardant and thermal stabilizing amounts of titanium dioxide. These siloxane polyetherimide copolymer compositions can be employed in electrical parts, wire coatings, building materials and airplane and automobile parts.

EP 0 526 161 A1

## Background of the Invention

This invention relates to titanium dioxide as a flame retardant and thermal stabilizer. More particularly, this invention relates to titanium dioxide as a non-halogenated flame retardant and thermal stabilizer for siloxane polyetherimide copolymers.

Thermoplastic resins, such as siloxane polyetherimides, polyetherimides, polycarbonates and blends thereof, are utilized for electrical parts, wire coatings, building materials, automobile parts and airplane parts. For example, U.S. patent 4,983,456, issued to Iwaskow et al. in 1991, discloses polymeric compositions of polyetherimides, polyimides, polyetheresters and the like in combination with conductive semi-metallic fibers employed in numerous electrical applications. These thermoplastic elastomeric resins can be exposed to relatively high temperatures, i.e., exceeding 200°C, which can lead to charring of the material or premature breakdown of the crystalline or amorphous structure of the thermoplastic elastomer after prolonged exposure to heat. Thus, it is most desirable and often required that such materials be flame resistant or have low flammability and be thermally stable.

Many flame retardant compounds that are utilized in thermoplastic elastomers can adversely affect the physical properties of the resin material. Flame retarding additives should not adversely affect other performance criteria. Thus, in addition to achieving flame retardancy and thermal stability, the flame retardant polymeric composition should possess processability, substantially retain its specified physical properties, and exhibit long-term aging compatibility.

U.S. patent 4,992,505, issued to Liu discloses flame retardant polyetherimide ester compositions comprising at least one polyetherimide ester resin and a flame-retarding amount of a mixture of at least one polyphosphate ester and at least one ammonium polyphosphate. The polyetherimide esters employed contain imide groups, polyether groups and ester groups in the polymer chain.

U.S. patent 4,977,234, issued to Matsuo et al. in 1990, discloses polycyanoaryl ethers which are heat resistant, flame retardant and solvent resistant. Crystallizing nucleators selected from the group consisting of alumina, aluminum hydroxide, aluminum powder, titanium dioxide and calcium fluoride are employed to crystallize the polycyanoaryl ethers.

U.S. patent 4,985,313, issued to Penneck et al. in 1991, discloses polymeric insulators comprising polyolefins, halogenated polymers or polyether ketones in combination with treated and untreated metal oxide flame retardants such as hydrated alumina and titania.

A need exists for siloxane polyetherimide copolymers having improved flame retardant properties.

## Summary of the Invention

In accordance with the present invention, a novel composition comprises a siloxane polyetherimide copolymer in combination with a flame-retarding and thermal-stabilizing amount of titanium dioxide.

The siloxane polyetherimide copolymer/titanium dioxide compositions of the present invention have been found to possess the physical and chemical resistance properties important in applications for electrical parts, wire coatings, building materials and automobile and airplane parts.

## Brief Description of the Drawings

FIG. 1 illustrates the isothermal weight loss of a siloxane polyetherimide copolymer containing various amounts of titanium dioxide at 700°F.

FIG. 2 illustrates the volatile siloxane cyclics generated by a siloxane polyetherimide copolymer containing various amounts of titanium dioxide at 700°F.

## Detailed Description of the Invention

The siloxane polyetherimide copolymers used in preparing the flame retardant and thermally stable compositions of the present invention preferably comprise repeating units of the formula:

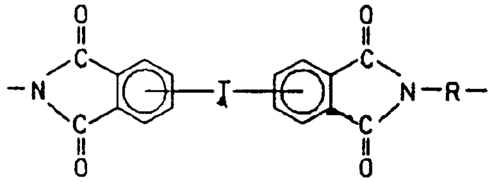

and repeating units of the formula:

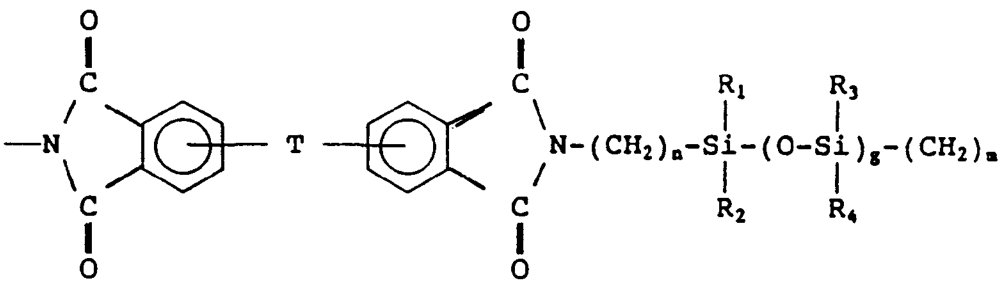

where T is -O- or a group of the formula -O-Z-O- wherein the divalent bonds of the -O- or the -O-Z-O- group are in the 3,3′, 3,4′, 4,3′ or 4,4′ positions; Z comprises (A)

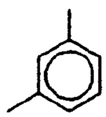 , 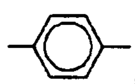 , 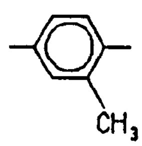 or 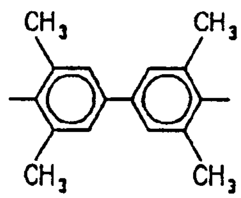

or (B) divalent organic radicals of the general formula

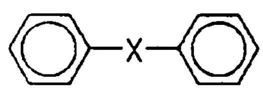

where X comprises divalent radicals of the formula:

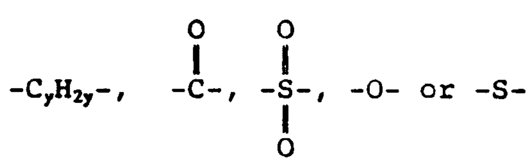

where y is an integer from 1 to about 5; R is a divalent organic radical comprising (a) aromatic hydrocarbon radicals having from 6 to about 20 carbon atoms, (b) alkylene radicals having from 2 to about 20 carbon atoms, and (c) divalent radicals of the formula

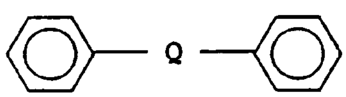

where Q comprises

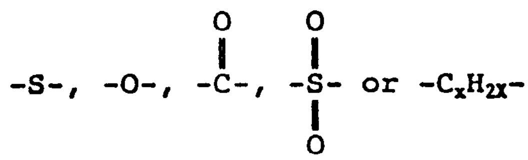

wherein x is an integer from 1 to about 5; and n and m independently are integers from 1 to about 10 and g is an integer from 1 to about 40 and examples of groups represented by $R_1$ through $R_4$ are independently, -H, -$CH_3$, -$C_zH_{2z}CH_3$ or phenyl, where z is an integer from 1 to about 5. Preferably, each of $R_1$ through $R_4$ is methyl.

The siloxane polyetherimide copolymers also may further comprise repeating polyimide units of the formula

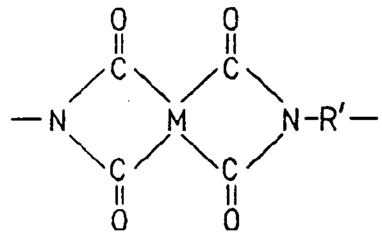

wherein M comprises

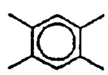 , 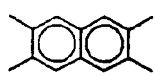 or 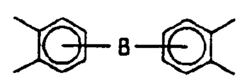

where B is -S- or

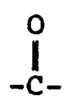

and R′ is R as previously defined or a group of the formula:

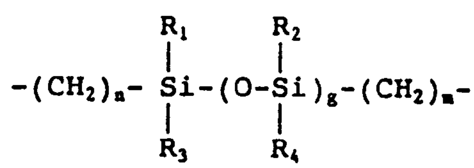

wherein n and m independently are integers from 1 to about 10 and g is an integer of from 1 to about 40 and examples of groups represented by $R_1$ through $R_4$ are independently, -H, -$CH_3$, -$C_zH_{2z}CH_3$ or phenyl, where z is an integer from 1 to about 5. Preferably, each of $R_1$ through $R_4$ is methyl.

The siloxane polyetherimide copolymers of the present invention can be prepared by any of the methods well known to those skilled in the art, including the reaction of an aromatic bis(ether anhydride) of the formula

(I)

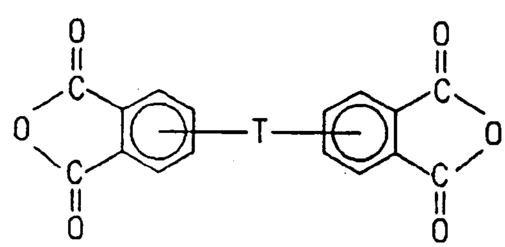

with an amine-terminated organosiloxane of the formula:

(II) 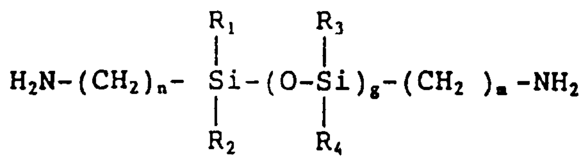

and an organic diamines of the formula:

(III) $H_2N\text{-}R\text{-}NH_2$

wherein T and R are as defined above, and n and m independently are integers from 1 to about 10, preferably from 1 to about 5, and g is an integer from 1 to about 40, preferably from 5 to about 25 and examples of groups represented by $R_1$ through $R_4$ are independently, -H, $-CH_3$, $-C_zH_{2z}CH_3$ or phenyl, where z is an integer from 1 to about 5. Preferably, each of $R_1$ through $R_4$ is methyl.

Bis(ether anhydride)s of formula I include, for example,

1,3-bis(2,3-dicarboxyphenoxy)benzene dianhydride,
1,4-bis(2,3-dicarboxyphenoxy)benzene dianhydride,
1,3-bis(3,4-dicarboxyphenoxy)benzene dianhydride,
1,4-bis(3,4-dicarboxyphenoxy)benzene dianhydride and 4,4'-bis(phthalic anhydride)ether.

A preferred class of aromatic bis(ether anhydride)s covered by formula I includes compounds of formulas IV, V and VI which follow:

(IV) 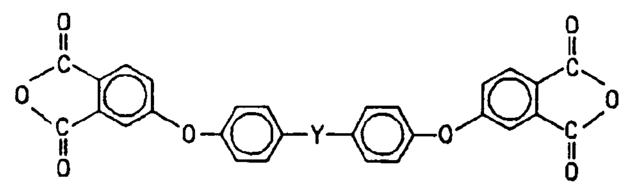

(V) 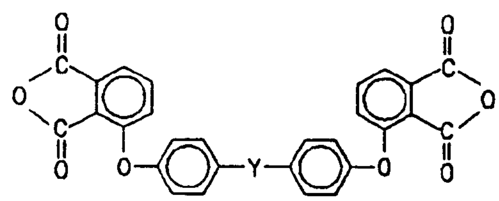

(VI) 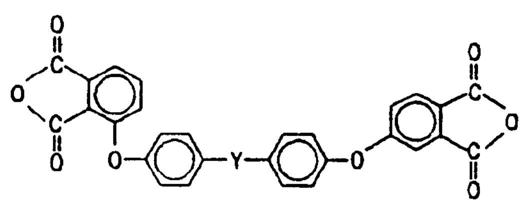

and mixtures thereof, where Y comprises -O-, -S-,

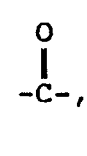, 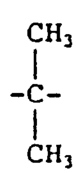 and 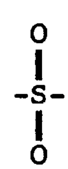 .

Aromatic bis(ether anhydride)s of formula IV include for example:
2,2-bis[4-(3,4-dicarboxyphenoxy)phenyl] propane dianhydride,
4,4′-bis(3,4-dicarboxyphenoxy)diphenyl ether dianhydride,
4,4′-bis(3,4-dicarboxyphenoxy)diphenyl sulfide dianhydride,
4,4′-bis(3,4-dicarboxyphenoxy)benzophenone dianhydride,
4,4′-bis(3,4-dicarboxyphenoxy)diphenyl sulfone dianhydride and mixtures thereof.

Aromatic bis(ether anhydride)s of formula V include, for example:
2,2-bis([4-(2,3-dicarboxyphenoxy)phenyl]propane dianhydride,
4,4′-bis(2,3-dicarboxyphenoxy)diphenyl ether dianhydride,
4,4′-bis(2,3-dicarboxyphenoxy)diphenyl sulfide dianhydride,
4,4′-bis(2,3-dicarboxyphenoxy)benzophenone dianhydride,
4,4′-bis(2,3-dicarboxyphenoxy)diphenyl sulfone dianhydride and mixtures thereof.

Aromatic bis(ether anhydride)s of formula VI include, for example:
4-(2,3-dicarboxyphenoxy)-4′-(3,4-dicarboxyphenoxy) diphenyl-2,2-propane dianhydride,
4-(2,3-dicarboxyphenoxy)-4′-(3,4-dicarboxyphenoxy) diphenyl ether dianhydride,
4-(2,3-dicarboxyphenoxy)-4′-(3,4-dicarboxyphenoxy) diphenyl sulfide dianhydride,
4-(2,3-dicarboxyphenoxy)-4′-(3,4-dicarboxyphenoxy) benzophenone dianhydride,
4-(2,3-dicarboxyphenoxy)-4′-(3,4-dicarboxyphenoxy) diphenyl sulfone dianhydride and mixtures thereof.

Some of the aromatic bis(ether anhydride)s of formula I are shown in U.S. Patent No. 3,972,902, issued to Heath et al. As described therein, the bis(ether anhydride)s can be prepared by the hydrolysis, followed by dehydration, of the reaction product of a nitrosubstituted phenyl dinitrile with a metal salt of dihydric phenol compound in the presence of a dipolar, aprotic solvent.

Additional aromatic bis(ether anhydride)s also covered by formula I above are disclosed in Koton, M.M., Florinski, F.S., Bessonov, M.I. and Rudakov, A.P. (Institute of Heteroorganic Compounds, Academy of Sciences, U.S.S.R.), U.S.S.R. patent 257,010, November 11, 1969, Appl. May 3, 1967 and by M.M. Koton, F.S. Florinski, Zh. Org. Khin. 4(5), 774 (1968).

The organic diamines of formula III include, for example:
m-phenylenediamine,
p-phenylenediamine,
4,4′-diaminodiphenylpropane,
4,4′-diaminodiphenylmethane (commonly named 4,4′-methylenedianiline),
4,4′-diaminodiphenylsulfide,
4,4′-diaminodiphenyl sulfone,
4,4′-diaminodiphenyl ether (commonly named 4,4′-oxydianiline),
1,5-diaminonaphthalene,
3,3-diamethylbenzedine,
3,3-dimethoxybenzedine,
2,4-bis(beta-amino-t-butylphenyl)toluene,
bis(p-beta-amino-t-butylphenyl)ether,
bis(p-beta-methyl-o-aminophenyl)benzene,
1,3-diamino-4-isoprophenyl)benzene,
1,2-bis(3-aminopropoxy)ethane,
benzidine,
m-xylenediamine,
2,4-diaminotoluene,
2,6-diaminotoluene,
bis(4-aminocyclohexyl)methane,
3-methylheptamethylenediamine,
4,4-dimethylheptamethylenediamine,
2,11-dodecanediamine,
2,2-dimethylpropylenediamine,
octamethylenediamine
3-methoxyhexamethylenediamine,
2,5-dimethylhexamethylenediamine,
3-methylheptamethylenediamine,
5-methylnonamethylenediamine,
1,4-cyclohexanediamine,

1,12-octadecanediamine,
bis(3-aminopropyl)sulfide,
N-methyl-bis(3-aminopropyl)amine,
hexamethylenediamine,
nonamethylenediamine,
decamethylenediamine and mixtures thereof.

Preferred siloxane polyetherimides are commercially available from General Electric Company, Pittsfield, Massachusetts U.S.A. under the registered trademarks Ultem and Siltem.

The amine-terminated organosiloxane of formula II and the organic diamine of formula III can be physically mixed prior to reaction with bis(ether anhydride)(s), thus forming a substantially random copolymer. Alternatively , block or alternating copolymers can be formed by forming prepolymers or sequential addition of reactants, as is well-known in the polymer arts.

Preferred amine terminated organosiloxanes are those of formula II, in which n and m are each 3, and which have a molecular weight distribution such that g has an average value ranging from about 9 to about 20.

The diamine component of the siloxane polyetherimide copolymers generally comprise from about 20 to about 50 mole % of the amine-terminated organosiloxane of formula II and from about 50 to about 80 mole % of the organic diamine of formula III. In preferred copolymers, the diamine component comprises from about 25 to about 40 mole %, most preferably about 30 mole % of the amine-terminated organosiloxane.

The siloxane polyetherimide copolymers of the present invention can be prepared by any of the procedures conventionally used for preparing siloxane polyetherimides. U.S. Patent No. 4,417,044, discloses methods which can be employed to prepare siloxane polyetherimide copolymers, and is incorporated herein by reference.

A flame retardant and thermal-stabilizing amount of titanium dioxide is employed in the compositions of this invention. A preferred means of preparing these compositions is to melt blend the titanium dioxide with the copolymer. This blending may be accomplished by procedures known in the art, e.g., in an extruder or other heated mixing apparatus. Alternatively, the titanium dioxide may be mixed with the above-described reactants during the synthesis and polymerization of the siloxane polyetherimide copolymers.

The titanium dioxide is added in amounts ranging from about 1 to about 25% by weight of the copolymer composition. Preferred amounts range from about 2 to 25% by weight, and most preferred amounts range from about 5 to about 10% by weight. The titanium dioxide employed can be any suitable form which can be mixed with the reactants of siloxane polyetherimide copolymers. Titanium dioxide employed to practice this invention can be commercially obtained from various manufacturers under numerous tradenames. For example, Zopaque® (manufactured by SCM Chemicals), Ti-pure® (manufactured by E.I. du Pont de Nemours & Co., Inc.), Titanox® (manufactured by NL Chemicals and NL Chem Canada Inc.), Tiso-Lit® (manufactured by Gulf and Western), fine particle size titanium dioxide manufactured, for example, by Degussa (as grade P-25) and Tioxide UK Ltd., and the like are commercially available titanium dioxide products which can be employed to practice this invention. In general, the titanium dioxide used in the compositions of this invention have particle sizes ranging from about 20 nanometers to about 200 nanometers or more. The higher particle-sized titanium dioxides are typically known as pigment grade materials. The lower particle-sized materials often are used for ultraviolet light absorption. For use in the present compositions, it has been found that optimum flame retardance and thermal stability can be achieved with lower concentrations of smaller particle-sized titanium dioxides (e.g., mean particle size of about 20 nanometers) than with the pigment grade materials.

The addition of titanium dioxide to siloxane polyetherimide copolymers in amounts specified herein improves the flame retardant characteristics of the copolymer material. Specifically, addition of titanium dioxide lowers the 2 minute heat release (2MHR) and peak heat release rate (PHRR) as measured by the Ohio State University (OSU) rate-of-release apparatus and also the maximum smoke density ($D_s$ max) as measured by the National Bureau of Standards Smoke Chamber. Titanium dioxide also thermally stabilizer siloxane polyetherimide copolymers by reducing the amount of siloxane polyetherimide copolymer which depolymerizes at relatively high temperatures, i.e., exceeding about 200°C, as can be observed by the reduction in isothermal weight loss and volatile siloxane cyclics. This effect can be demonstrated by gas chromatography-mass spectroscopy analysis of the head space over a sample of product heated, for example, to a typical processing temperature.

In addition to the copolymeric materials and titanium dioxide, the compositions of this invention optionally can comprise other materials such as fillers, additives, reinforcing agents and the like. Examples of such optional materials include, but are not limited to, glass fiber, glass spheres, mica, clay, carbon fiber, carbon powder and the like.

The following examples are provided to further illustrate this invention but are not intended to limit its scope.

Example 1

The siloxane polyetherimide copolymers employed in this experiment were obtained from the General Electric Company, under the trademark ULTEM® D9000 or SILTEM®. The titanium dioxide employed in this experiment was Zopaque® R69 or DEGUSSA® P25.

The siloxane polyetherimide copolymer employed in this experiment was a random copolymer and a reaction product of a mixture of 60 mole % of m-phenylenediamine and 40 mole % of an amine terminated organosiloxane of formula II wherein n and m are 3 and g has an average value of about 9 with 2,2-bis[4-(3,4-dicarboxyphenoxy)phenyl]propane dianhydride. Twelve separate batches of the siloxane polyetherimide copolymer were prepared. Titanium dioxide was melt blended with the copolymer in variable amounts ranging from about 2 to about 25% by weight to 10 of the 12 batches. The 2 minute heat release, peak heat release rate and maximum smoke density were measured on several samples and their values were determined. Tables 1 and 2 disclose the results of these experiments. The results of these experiments show that siloxane polyetherimide copolymers with titanium dioxide added in amounts ranging from about 2 to about 25% by weight have reduced 2 MHR, PHRR and NBS values when compared to the corresponding siloxane polyetherimide copolymer without titanium dioxide.

The addition of titanium dioxide to a siloxane polyetherimide copolymer enhances flame retardance in siloxane polyetherimide copolymers. The copolymer employed was a so-called "random copolymer" which may, in fact, also comprise alternating short segments of polyetherimide and siloxane segments.

Example 2

The siloxane polyetherimide copolymer employed in this experiment was prepared according to the method disclosed in Example 1. Six individual batches of siloxane polyetherimide copolymer were prepared, and titanium dioxide (Zopaque® R69) was added to five of the samples in concentrations ranging from about 1 to about 15% by weight. The thermal stability of the six compositions was determined by measuring the isothermal weight loss by thermogravimetric analysis (TGA) and volatile siloxane cyclics by GC-mass spectroscopy headspace analysis generated by siloxane polyetherimide copolymers at 371°C (700°F). The results presented in Table 3 disclose decreased weight loss and decreased cyclic volatiles for siloxane polyetherimide copolymers comprising titanium dioxide when compared to siloxane polyetherimide copolymer without titanium dioxide.

Figures 1 and 2 clearly illustrate the improved thermal stability of siloxane polyetherimide copolymers with titanium dioxide. Figure 1 is a graph of the isothermal weight loss of siloxane polyetherimide copolymer samples as measured by TGA. Optimum thermal stability was observed when the siloxane polyetherimide copolymer had about 5% by weight of titanium dioxide added resulting in only a 5.5% weight loss after 136 minutes at 371°C. The siloxane polyetherimide copolymer without titanium dioxide was far less stable with a weight loss of about 8.8% after 136 minutes at 371°C.

Figure 2 is a graph of volatile siloxane cyclics as measured by mass spectroscopy. Again, optimum thermal stability was observed when the siloxane polyetherimide copolymer had about 5% by weight of titanium dioxide added resulting in a $D_3$ count of only about 72 at 371°C. The siloxane polyetherimide copolymer without titanium dioxide was far less stable having a $D_3$ count of about 246 at 371°C.

Addition of titanium dioxide also has been found to stabilize the melt rheology (e.g., the melt index) towards processing of the siloxane polyetherimide. This phenomenon is manifested by a better maintenance of physical properties after processing, as compared to those of unmodified resins. This effect is particularly pronounced at titanium dioxide concentrations ranging from about 2% to about 10% by weight.

TABLE 1

| | | | | | | | | |
|---|---|---|---|---|---|---|---|---|
| ULTEM® D9000-1000 | 100.0 | 98.0 | 95.0 | 93.0 | 90.0 | 85.0 | 80.0 | 75.0 |
| $TiO_2$ (ZOPAQUE R69) | 0 | 2.0 | 5.0 | 7.0 | 10.0 | 15.0 | 20.0 | 25.0 |
| FR PROPERTIES | | | | | | | | |
| 2 MHR ($KW*Min/m^2$) | 68* | 46* | 39* | 35* | 31* | 31* | 15 | 15 |
| PHRR ($KW/m^2$) | 106* | 83* | 71* | 74* | 72* | 75* | 50 | 60 |
| NBS SMOKE Ds max | 212* | 185* | 90* | 93* | 73* | 120* | - | - |

* Average of experiments

TABLE 2

| | | | | |
|---|---|---|---|---|
| ULTEM® D9000-1000 | 100 | 98 | 95 | 90 |
| $TiO_2$ (DEGUSSA P25)) | - | 2 | 5 | 10 |
| FR PROPERTIES | | | | |
| 2 MHR (KW*Min/$m^2$) | 88 | 47 | 41 | 35 |
| PHRR (KW/$m^2$) | 139 | 191 | 92 | 77 |
| NBS SMOKE Ds max | 238 | 73 | 75 | 48 |

TABLE 3

| | | | | | | |
|---|---|---|---|---|---|---|
| Formulation | | | | | | |
| SILTEM (ULTEM® D9000) | 100 | 99 | 98 | 95 | 90 | 85 |
| $TiO_2$ (Zopaque R69) | 0 | 1 | 2 | 5 | 10 | 15 |
| Properties | | | | | | |
| Wt. % loss at 700°F* | 8.8 | 6.2 | 6.0 | 5.8 | 7.3 | 9.7 |
| Cyclic volatiles at 700°F (counts)* (x $10^3$) | 246 | 184 | 119 | 72 | 97 | 103 |
| Pellet MI | 1.03 | 1.00 | 1.05 | 1.00 | 1.04 | 0.98 |
| Part MI | 1.39 | 1.12 | 1.12 | 1.15 | 1.02 | 1.09 |
| OSU | 73 | 56 | 50 | 35 | 37 | 27 |
| Two minute peak | 102 | 74 | 75 | 61 | 70 | 47 |

* Normalized to account for SILTEM content.

## Claims

1. A copolymer composition comprising a siloxane polyetherimide copolymer and a flame-retarding amount of titanium dioxide.

2. The copolymer composition of claim 1, wherein the siloxane polyetherimide copolymer has repeating units of the formula:

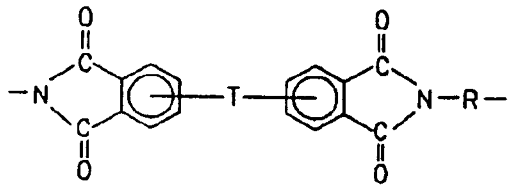

and repeating units of the formula:

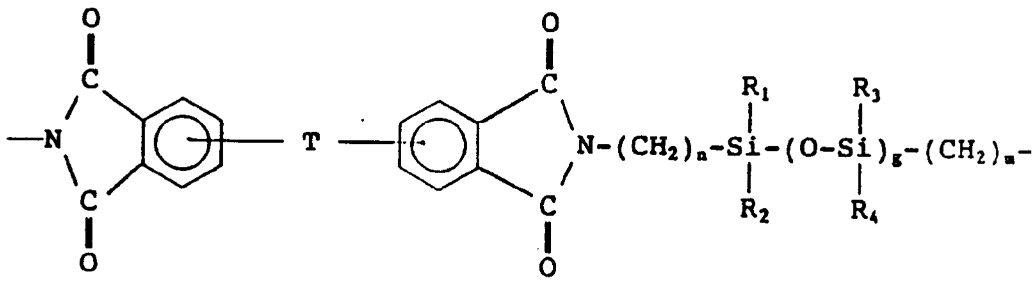

wherein T is -O- or a group of the formula

-O-Z-O-

wherein the divalent bonds of the -O- of the

-O-Z-O-

group are in the 3,3′, 3,4′, 4,3′ or 4,4′ positions; Z is (A)

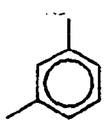 , 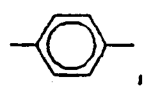 , 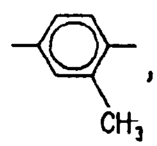 , 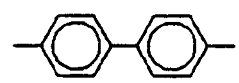 ,

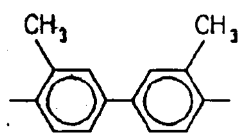 or 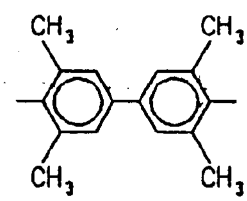

or (B) divalent organic radicals of the general formula:

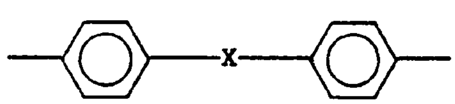

where X is a divalent radical of the formula

$-C_yH_{2y}-$, 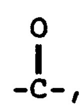 , 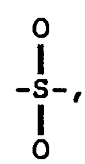 , -O- or -S-

wherein y is an integer from 1 to about 5; and R is a divalent organic radical selected from the group consisting of (a) aromatic hydrocarbon radicals having from 6 to about 20 carbon atoms, (b) alkylene radicals having from 2 to about 20 carbon atoms and divalent radicals and (c) of the formula

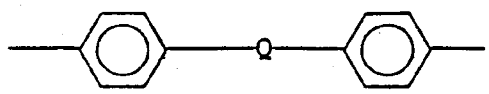

wherein Q is

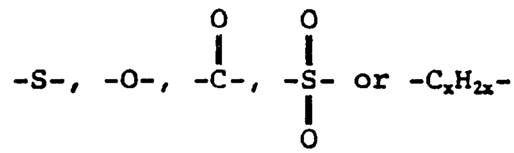

wherein x is an integer from 1 to about 5; and n and m independently are integers from 1 to about 10 and g is an integer from 1 to about 40, and $R_1$ through $R_4$ are independently, -H, $-CH_3$, $-C_zH_{2z}CH_3$ or phenyl, where z is an integer from 1 to about 5.

3. The copolymer composition of claim 2, wherein the siloxane polyetherimide copolymer further comprises repeating units of the formula

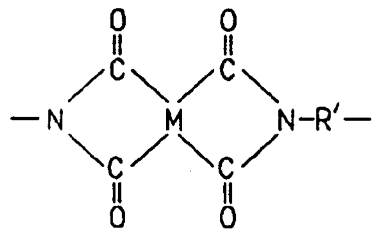

wherein M is

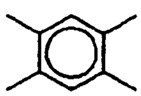,
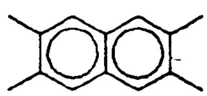
or
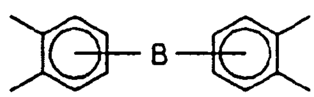

where B is -S- or

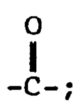

and R′ is R or a group of the formula

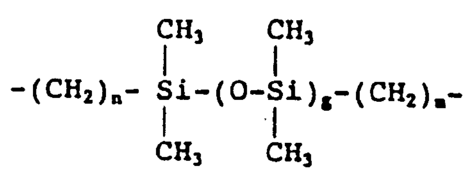

wherein n and m independently are integers from 1 to about 10 and g is an integer from 1 to about 40.

4. The copolymer composition of claim 2, wherein n and m are integers from 1 to about 5, and g is an integer from 5 to about 25.

5. The copolymer composition of claim 2, wherein the siloxane polyetherimide copolymer is substantially a random copolymer.

6. The copolymer composition of claim 2, wherein the siloxane polyetherimide copolymer is a block polymer.

7. The copolymer composition of claim 2, wherein the siloxane polyetherimide copolymer is an alternating copolymer.

8. The copolymer composition of claim 2, wherein the titanium dioxide concentration ranges from about 1 to about 25% by weight of the composition.

9. The copolymer composition of claim 2, wherein the titanium dioxide concentration ranges from about 1 to about 15% by weight of the composition and has an average particle size of from about 20 to about to about 200 nanometers.

10. The copolymer composition of claim 9, wherein the titanium dioxide concentration ranges from about 5 to about 10% by weight of the composition.

11. The copolymer composition of claim 1, wherein the siloxane polyetherimide copolymer comprises from about 90 to about 95% by weight of the composition, and titanium dioxide comprises from about 5 to about 10% by weight of the composition.

12. The copolymer composition of claim 11, wherein the siloxane polyetherimide copolymer comprises repeating units of the formula

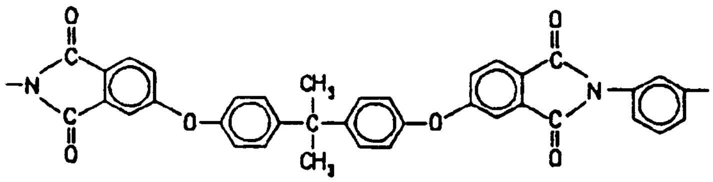

and

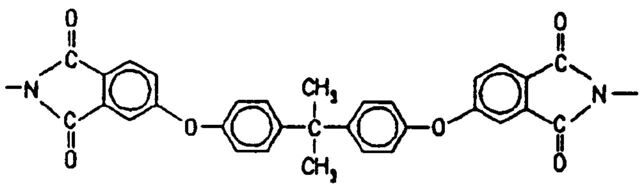

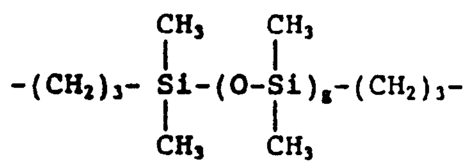

wherein g has an average value of from about 9 to about 20.

FIG. 1 % Wt. Loss at 700°F vs. Titanium Dioxide Content

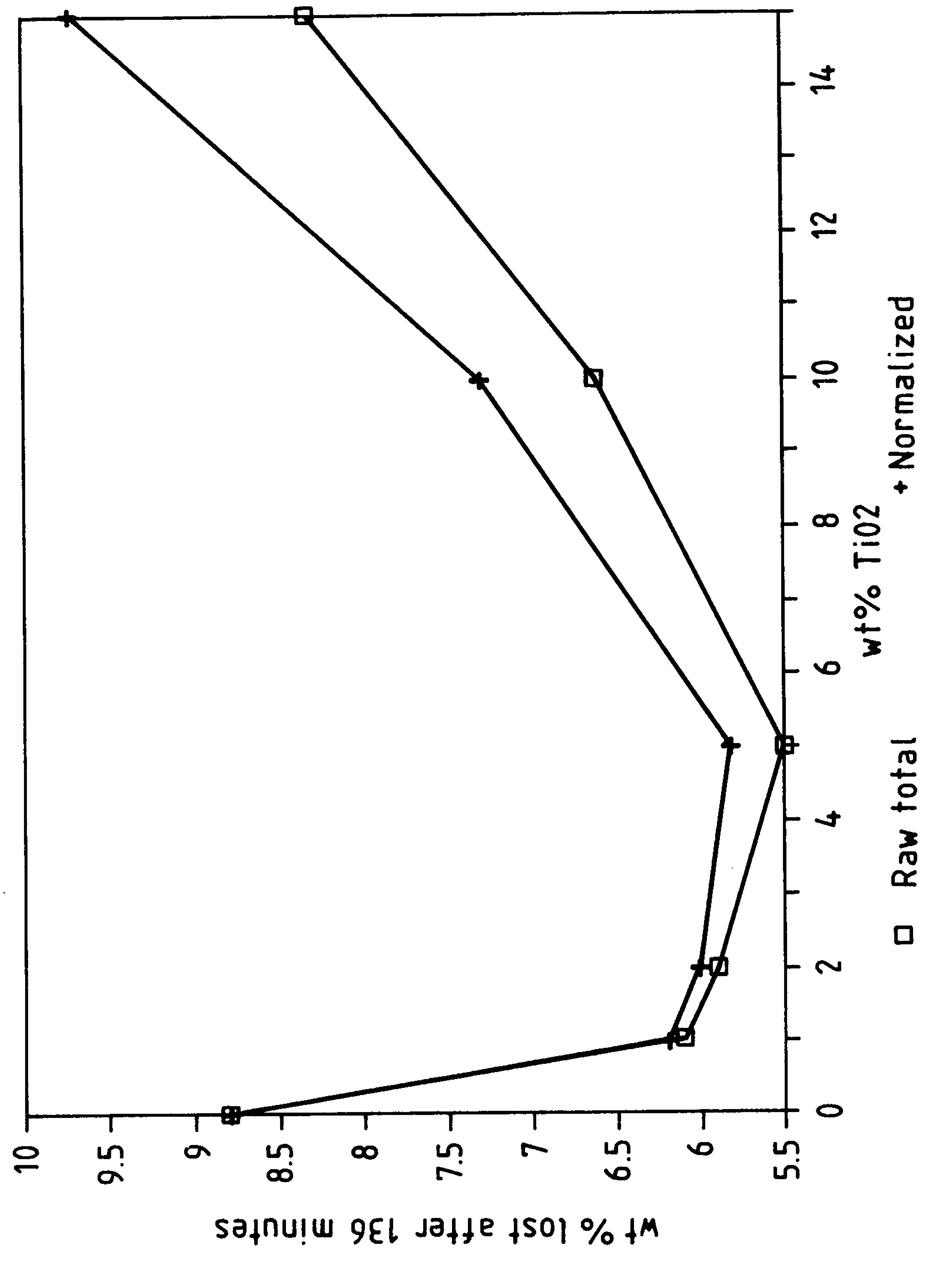

FIG. 2 Volatile Siloxane Cyclics Generation at 700°F vs. Titanium Dioxide Content

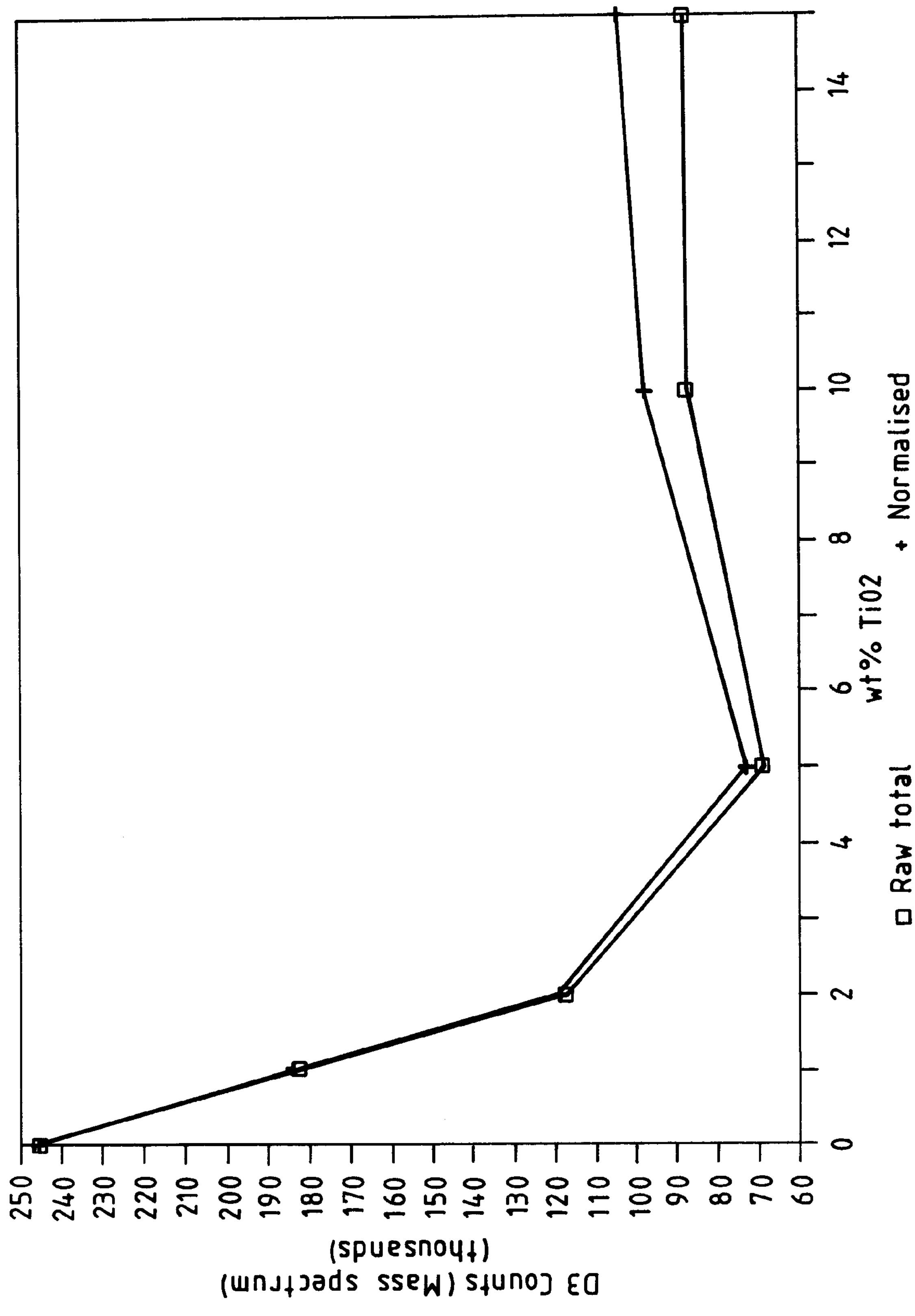

European Patent Office

# EUROPEAN SEARCH REPORT

Application Number
EP 92 30 6866

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | EP-A-0 307 670 (GENERAL ELECTRIC COMPANY)<br>* claims 22-34 *<br>* page 8, line 42 - line 45 *<br>* page 9, line 37 - line 54 *<br>* examples 39-41; table I *<br>--- | 1-12 | C08L79/08<br>C08L83/10<br>C08K3/22 |
| X | DATABASE WPIL<br>Section Ch, Week 8515, 5 June 1985<br>Derwent Publications Ltd., London, GB;<br>Class A26, AN 85-089681<br>& JP-A-60 038 464 (SUMITOMO CHEMICAL K.K.)<br>28 February 1985<br>* abstract *<br>--- | 1,2 | |
| A | DATABASE WPIL<br>Section Ch, Week 8606, 2 April 1986<br>Derwent Publications Ltd., London, GB;<br>Class A82, AN 86-038687<br>& JP-A-60 258 259 (HITACHI CHEMICAL K.K.)<br>20 December 1985<br>* abstract *<br>----- | 1 | TECHNICAL FIELDS SEARCHED (Int. Cl.5 )<br>C08L<br>C08K |

The present search report has been drawn up for all claims

| Place of search | Date of completion of the search | Examiner |
|---|---|---|
| THE HAGUE | 09 OCTOBER 1992 | HOLLENDER C.J.F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)